(19) Europäisches Patentamt
European Patent Office
Office européen des brevets

(11) **EP 3 447 909 B1**

(12) **FASCICULE DE BREVET EUROPEEN**

(45) Date de publication et mention
de la délivrance du brevet:
**17.06.2020   Bulletin 2020/25**

(51) Int Cl.:
***H02S 50/15*** *(2014.01)*

(21) Numéro de dépôt: **18188785.2**

(22) Date de dépôt: **13.08.2018**

(54) **PROCÉDÉ ET DISPOSITIF DE CARACTÉRISATION D'UN MODULE PHOTOVOLTAÏQUE**

VERFAHREN UND VORRICHTUNG ZUR CHARAKTERISIERUNG EINES FOTOVOLTAIKMODULS

METHOD AND DEVICE FOR CHARACTERISING A PHOTOVOLTAIC MODULE

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité:   **25.08.2017   FR 1757875**

(43) Date de publication de la demande:
**27.02.2019   Bulletin 2019/09**

(73) Titulaire: **Electricité de France
75008 Paris (FR)**

(72) Inventeur: **EL HAJJE, Gilbert
92200 Neuilly-sur-Seine (FR)**

(74) Mandataire: **Plasseraud IP
66, rue de la Chaussée d'Antin
75440 Paris Cedex 09 (FR)**

(56) Documents cités:
**WO-A1-2017/108511      US-A1- 2015 070 487**

• **OLIVA FLORIAN ET AL: "Optical methodology for
process monitoring of chalcopyrite photovoltaic
technologies: Application to low cost
Cu(In,Ga)(S,Se)2electrodeposition based
processes", SOLAR ENERGY MATERIALS AND
SOLAR CELLS, ELSEVIER SCIENCE
PUBLISHERS, AMSTERDAM, NL, vol. 158, 22
janvier 2016 (2016-01-22), pages 168-183,
XP029757459, ISSN: 0927-0248, DOI:
10.1016/J.SOLMAT.2015.12.036**
• **LOU SHISHU ET AL: "Characterizing different
defects in multicrystalline silicon solar cells via
modern imaging methods", VISUAL
COMMUNICATIONS AND IMAGE PROCESSING;
20-1-2004 - 20-1-2004; SAN JOSE,, vol. 9563, 23
septembre 2015 (2015-09-23), pages
95630Y-95630Y, XP060059408, DOI:
10.1117/12.2195811 ISBN: 978-1-62841-730-2**

**Description**

DOMAINE DE L'INVENTION

L'invention concerne un procédé de caractérisation de module photovoltaïque, pour évaluer ses performances de manière quantitative, ou pour identifier d'éventuels défauts de production lors d'une inspection.

ETAT DE LA TECHNIQUE

La technologie photovoltaïque est en forte croissance, tant en volume et en cadences de production qu'en diversité de technologies. Pour assurer l'industrialisation de cette technologie il est nécessaire de renforcer les outils de contrôle de la qualité des modules fabriqués, qui permettent de garantir l'homogénéité de la performance, et la qualité et la répétabilité de la production des panneaux photovoltaïques de technologies variées. Le document O. Florian et al. Solar Energy Materials and Solar Cells, vol. 158, 22 janvier 2016, p. 168-183 décrit un procédé de caractérisation d'un module photovoltaïque. Le document WO2017/108511A décrit aussi un procédé de de caractérisation d'un module photovoltaïque.

Il existe des systèmes permettant de contrôler la qualité d'un module photovoltaïque produit. Certains de ces systèmes reposent sur l'exploitation de la luminescence des modules photovoltaïques : en appliquant une excitation lumineuse (photoluminescence) ou électrique (électroluminescence) à un module, celui-ci émet de la lumière. En acquérant une image de la lumière émise et en la traitant, on peut détecter des défauts de qualité du module tels que des microfissures ou des problèmes de connexion.

C'est par exemple le cas dans le document US 2015/0070487 qui décrit l'acquisition d'images d'électroluminescence d'un module par deux caméras présentant des spectres de sensibilité différents, la construction à partir des images acquises d'une image d'un module dépourvu de défaut, et la détection automatique des défauts du module par la soustraction à l'une des images acquises de l'image sans défaut.

L'inconvénient de ce type de procédé est son aspect uniquement qualitatif, qui empêche de déterminer des indicateurs de performance et de qualité photovoltaïques absolues, et donc quantitatifs.

On connaît aussi le document WO2017108511 qui décrit d'acquérir deux images d'électroluminescence d'un module photovoltaïque avec deux caméras présentant des efficacités de détection différentes, et de déterminer à partir de ces images une énergie de bande interdite du module.

Dans ce document, l'énergie de bande interdite est exploitée pour obtenir une estimation uniquement qualitative des défauts du module. De plus, la procédure de calibration présentée dans ce document ne se fonde pas sur une approche analytique, de sorte qu'elle ne permet pas d'évaluer l'incertitude sur les données extrapolées. Les conclusions tirées des données extrapolées et analysées peuvent donc être inexactes.

Il existe également des solutions d'imagerie de luminescence de modules qui sont intégrées dans des lignes de production, et qui sont capables d'établir, pour un module de technologie silicium, une cartographie quantitative du temps de vie et de la longueur de diffusion des porteurs de charges au sein du module.

Cependant ces technologies ne permettent pas d'accéder à des fluctuations absolues de performance et de rendement photovoltaïques. De plus elles ne sont pas adaptées à d'autres technologies de modules photovoltaïques tels que ceux comprenant des couches minces à base de chalcogénures, et dont les propriétés sont fortement inhomogènes spatialement.

En outre, ces technologies ne sont pas déployables sous une version mobile qui permettrait de suivre les performances et la dégradation d'un module en exploitation.

DESCRIPTION DE L'INVENTION

Compte-tenu de ce qui précède, l'invention a pour but de pallier au moins en partie les inconvénients de l'art antérieur.

En particulier, l'invention a pour but de proposer un procédé de caractérisation quantitative des performances d'un module photovoltaïque.

Un autre but de l'invention est de pouvoir être utilisée avec n'importe quelle technologie de module photovoltaïque.

Un autre but de l'invention est de pouvoir caractériser des modules en cours de fabrication ou en exploitation.

A cet égard, l'invention a pour objet un procédé de caractérisation d'un module photovoltaïque, comprenant les étapes suivantes :

- acquisition d'au moins une image d'électroluminescence du module,
- à partir de l'image acquise, détermination d'une cartographie de l'énergie de bande interdite apparente du module photovoltaïque, et
- à partir de la cartographie de l'énergie de bande interdite apparente, détermination d'une cartographie du module pour au moins l'une des grandeurs suivantes :

  ◦ tension de circuit ouvert,
  ◦ courant de saturation, et
  ◦ perte absolue de rendement photovoltaïque.

Dans un mode de réalisation, le procédé comprend une étape de détermination d'une cartographie de perte absolue de rendement photovoltaïque du module, comprenant :

- la détermination d'une cartographie des fluctuations de l'énergie de bande apparente par rapport à une valeur d'énergie de bande apparente correspondant à un maximum d'efficacité de rendement photovoltaïque, et
- la déduction de la cartographie de perte absolue de rendement photovoltaïque à partir de la cartographie des fluctuations d'énergie de bande apparente.

Dans un mode de réalisation, le procédé comprend une étape de détermination d'une cartographie de tension de circuit ouvert du module, ladite tension de circuit ouvert $V_{oc}$ (x,y) étant obtenue par l'équation suivante :

$$V_{0c}(x,y) = \frac{E_g^{app}(x,y)}{q}$$

Où:
- $E_g^{app}(x,y)$ est l'énergie de bande interdite apparente du module en un point (x,y) du module, et
- q est la charge électrique élémentaire.

Dans un mode de réalisation, le procédé comprend une étape de détermination d'une cartographie du courant de saturation du module, dans laquelle le courant de saturation du module $J_0$(x,y) est obtenu par l'équation suivante :

$$J_0(x,y) = A.\exp\left(\frac{-E_g^{app}(x,y)}{kT}\right) + B.\exp\left(\frac{-E_g^{app}(x,y)}{2kT}\right)$$

où A et B sont des constantes.

Dans un mode de réalisation, l'étape de détermination de la cartographie de l'énergie de bande interdite apparente du module photovoltaïque comprend une étape préliminaire de calibration de l'intensité de l'image d'électroluminescence acquise. Dans ce cas, la détermination de la cartographie de l'énergie de bande interdite apparente comprend en outre :

- la détermination, à partir de l'intensité de l'image d'électroluminescence acquise, et pour chaque point (x,y) du module, d'une courbe du rendement quantique externe du module photovoltaïque en fonction de l'énergie des photons émis par le module, et
- en chaque point (x,y) du module, la détermination de la valeur de l'énergie de bande interdite apparente à partir de la courbe du rendement quantique externe.

Dans un autre mode de réalisation, le procédé comprend l'acquisition de deux images d'électroluminescence du module, les deux images étant acquises respectivement par deux caméras présentant des efficacités différentes de détection de photons en fonction de la longueur d'onde des photons, et la cartographie de l'énergie de bande interdite apparente du module est élaborée à partir d'une cartographie du ratio des intensités d'électroluminescence des deux images.

Dans ce mode de réalisation, l'étape de détermination de la cartographie de bande interdite apparente comprend avantageusement une étape de calibration comportant :

- pour un ensemble de points du module, la mesure du rendement quantique externe du module, et la déduction de l'énergie de bande interdite apparente à partir du rendement quantique externe,
- pour le même ensemble de points du module, la mesure d'un spectre d'électroluminescence du module et la déduction de la longueur d'onde d'intensité maximale d'émission,
- la détermination à partir de l'ensemble des points d'une relation entre l'énergie de bande interdite apparente et la longueur d'onde d'intensité maximale d'émission.

L'étape de détermination de la cartographie de bande interdite apparente peut comprendre ensuite :

- la détermination d'une relation entre la longueur d'onde d'intensité maximale d'émission du module et le ratio des intensités d'électroluminescence des deux images à partir des valeurs du ratio pour le même ensemble de points du module, et
- la déduction d'une expression de l'énergie de bande interdite apparente en tout point du module en fonction du ratio des intensités d'électroluminescence des deux images.

Avantageusement, l'ensemble de points du module comprend au moins 5 points, et de préférence 10 points, et les points sont choisis tels que les valeurs du ratio des intensités d'électroluminescence des deux images sont différentes pour les différents points de l'ensemble.

L'invention a également pour objet un système de caractérisation d'un module photovoltaïque, comprenant :

- une source d'alimentation électrique, adaptée pour fournir une alimentation électrique au module photovoltaïque,
- au moins une caméra adaptée pour acquérir une image d'électroluminescence du module, et
- une unité de traitement, comprenant un calculateur,

le système étant caractérisé en ce qu'il est adapté pour la mise en oeuvre du procédé selon la description précédente.

Dans un mode de réalisation, le système de caractérisation peut comprendre en outre :

- une deuxième caméra, présentant une efficacité de détection de photons en fonction de l'énergie des photons différente de celle de la première caméra, et
- un spectromètre.

Le procédé selon l'invention permet d'établir une cartographie quantitative d'au moins l'un des indicateurs de performance suivants pour un module photovoltaïque :

- tension de circuit ouvert,
- courant de saturation, et
- perte absolue de rendement photovoltaïque.

Pour ce faire, l'invention peut être mise en oeuvre aisément, en utilisant, selon un premier mode de réalisation, deux caméras présentant des spectres de détection différents et une méthode de calibration adaptée. Dans ce cas, l'énergie de bande interdite apparente du module peut être cartographiée sans avoir besoin d'accéder à l'intensité des images d'électroluminescence en unités absolues.

Selon un autre mode de réalisation, qui nécessite une calibration des images d'électroluminescence pour obtenir leurs valeurs d'intensité absolue, une seule caméra est nécessaire et le nombre d'étapes de calculs nécessaires à l'obtention des résultats finaux est réduit.

L'invention peut être appliquée à l'échelle industrielle en étant installée par exemple sur une ligne de production de modules photovoltaïques, elle permet alors d'écarter les produits non conformes et de vérifier la répétabilité et l'homogénéité de fabrication des modules. L'invention peut également être utilisée pour contrôler le vieillissement et la dégradation d'un module photovoltaïque en exploitation.

DESCRIPTION DES FIGURES

D'autres caractéristiques, buts et avantages de l'invention ressortiront de la description qui suit, qui est purement illustrative et non limitative, et qui doit être lue en regard des dessins annexés sur lesquels:

- la figure 1 représente schématiquement les principales étapes d'un procédé de caractérisation d'un module photovoltaïque selon un mode de réalisation de l'invention.
- La figure 2a représente un exemple de spectre d'électroluminescence d'un module photovoltaïque à base de silicium,
- La figure 2b représente les courbes de rendement quantique d'une caméra CCD Si et d'une caméra InGaAs,
- La figure 3 représente la détermination de l'énergie de bande interdite par extrapolation linéaire de la courbe du rendement quantique externe d'un module photovoltaïque en fonction de l'énergie des photons incidents,

- La figure 4a représente un exemple de partie d'un système de caractérisation pour l'acquisition d'images d'électroluminescence,
- La figure 4b représente d'autres composants d'un système de caractérisation pour l'acquisition de spectres d'électroluminescence.
- La figure 5 représente la courbe d'efficacité maximale d'une cellule photovoltaïque en fonction de l'énergie de bande interdite.

DESCRIPTION DETAILLEE D'AU MOINS UN MODE DE REALISATION DE L'INVENTION

*Procédé de caractérisation*

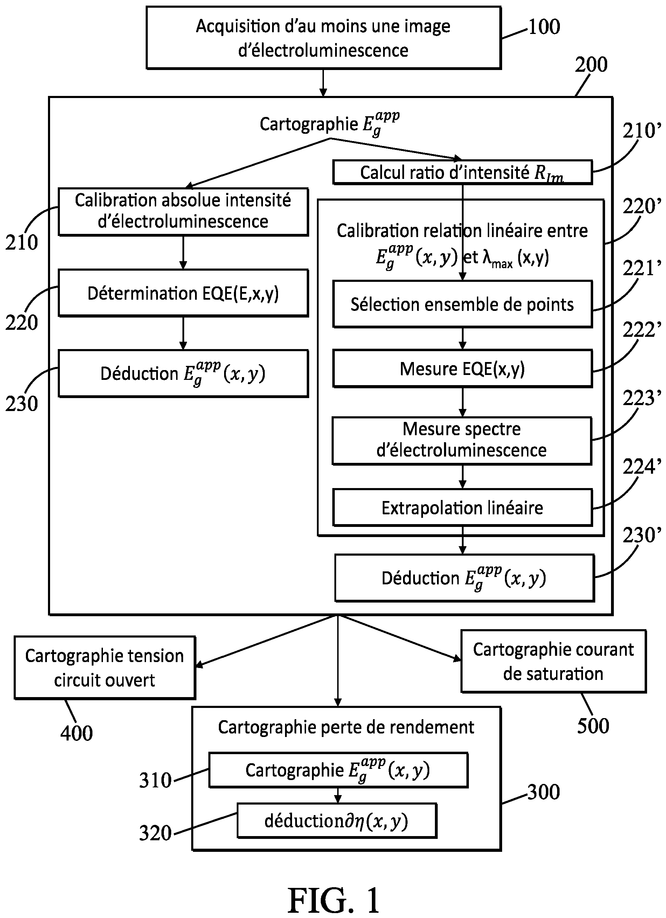

En référence à la figure 1, on a représenté les principales étapes d'un procédé de caractérisation d'un module photovoltaïque M.

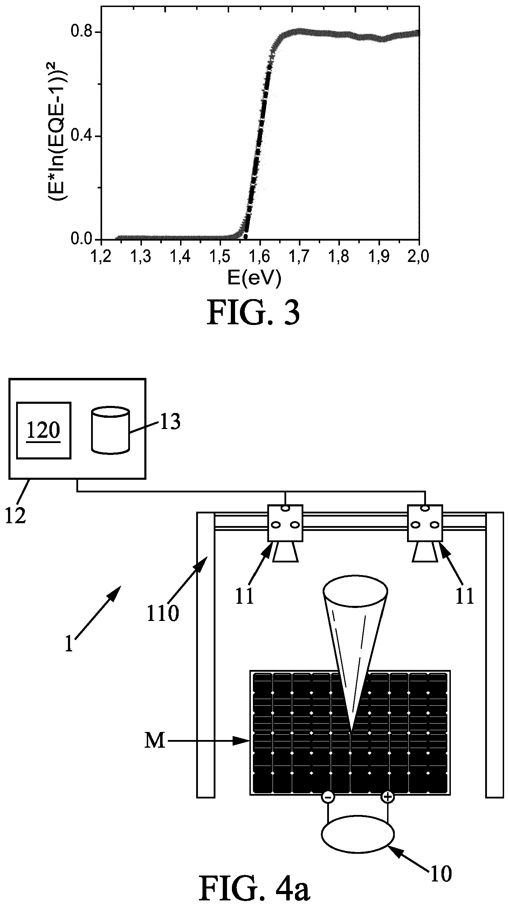

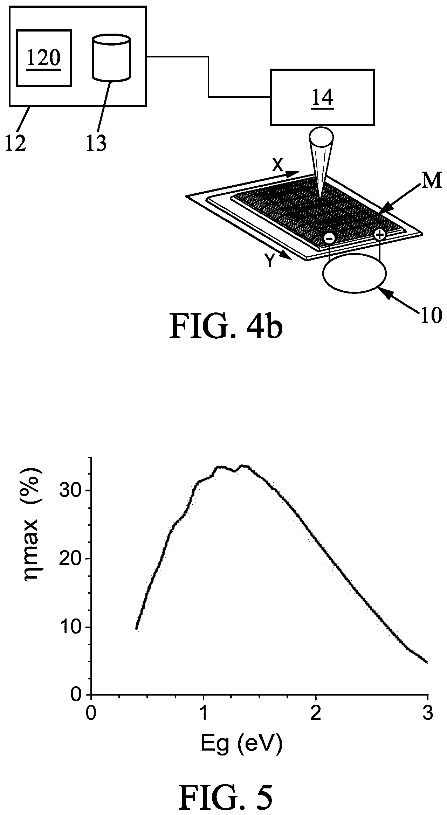

Ce procédé est mis en œuvre par un système 1 représenté sur les figures 4a à 4c et qui comprend au moins une source d'alimentation électrique 10 du module, de préférence un générateur de tension, au moins une caméra 11, et une unité de traitement 12 comprenant au moins un calculateur 120 configuré pour mettre en œuvre sur la ou les images acquises les traitements décrits ci-après. Le calculateur 120 peut être un processeur, un microprocesseur, ou encore un circuit intégré de type FPGA ou ASIC, etc.

Le système 1 comprend en outre une mémoire 13 de stockage des images acquises par la ou les caméra(s). Cette mémoire peut être intégrée à l'unité de traitement ou être localisée à distance de celle-ci.

Les connexions entre la caméra, l'unité de traitement 12 et/ou la mémoire 13 peuvent être réalisées de manière filaire, mais sont plus avantageusement des connexions sans-fil, à distance, via un réseau de télécommunications tel qu'internet.

De retour à la figure 1, le procédé comprend une première étape 100 d'acquisition d'au moins une image d'électroluminescence du module photovoltaïque par la ou les caméra(s) 11. Pour ce faire, la source d'alimentation électrique 10 fournit une alimentation électrique au module. Avantageusement, l'alimentation est une tension électrique appliquée aux bornes du module, préférablement mais non limitativement égale à la tension de circuit ouvert moyenne du module.

L'application d'une tension (ou d'un courant) électrique provoque la génération par le module d'un signal d'électroluminescence, qui est acquis par la caméra.

Préférablement, la caméra 11 est choisie de manière à être apte à détecter le signal d'électroluminescence émis par le module, en fonction de sa réponse spectrale et de la technologie du module, qui détermine les longueurs d'onde d'émission du signal d'électroluminescence. Par exemple, pour un module photovoltaïque à base de chalcogénures CIGS en couche mince ou à base de silicium cristallin, le spectre d'électroluminescence du module se trouve dans l'infrarouge et la caméra est avantageusement du type InGaAs.

Le procédé comprend ensuite une étape 200 d'établissement d'une cartographie de l'énergie de bande interdite apparente du module notée $E_g^{app}$, en tout point (x,y) du module, à partir de la ou des image(s) acquise(s). L'énergie de bande interdite apparente correspond à l'énergie minimale qu'un photon incident atteignant le module doit posséder pour pouvoir être absorbé par ce dernier et générer une certaine quantité de charge électrique. Cette énergie de bande interdite est variable spatialement pour un module, de sorte que l'on peut transformer une cartographie d'intensité d'électroluminescence du module en une cartographie d'énergie de bande interdite apparente.

Cette étape 200 peut être mise en œuvre de deux façons différentes.

*Premier mode de détermination de la cartographie de $E_g^{app}$*

Dans un premier mode de réalisation, la cartographie de l'énergie de bande interdite est élaborée à partir d'une seule image d'électroluminescence du module. Dans ce cas, le système 1 de caractérisation ne comprend qu'une seule caméra, et l'étape 200 comprend une sous-étape 210 de calibration absolue de l'intensité d'électroluminescence de l'image acquise, c'est-à-dire de détermination de manière absolue du flux de photons émis dans chaque pixel de l'image d'électroluminescence absolue, par unité de longueur d'onde et par seconde. Cette calibration permet donc d'établie une relation entre le nombre de coups mesurés par la caméra 11 d'acquisition et le nombre de photons effectivement émis par le module.

Pour mettre en œuvre cette calibration, le système de caractérisation comporte avantageusement un laser et une fibre optique (non représentés).

Selon un mode de réalisation préféré, une fibre optique est positionnée en sortie d'un laser, en choisissant l'ouverture numérique de la fibre suffisamment faible par rapport à celle de l'objectif de la caméra 11 pour garantir que toute l'intensité lumineuse du laser transmise par la fibre est collectée par la caméra.

Une image de réponse de la caméra est acquise dans les mêmes conditions d'acquisition que les images d'électroluminescence lors de l'étape 100, c'est-à-dire pour un même éclairage ambiant, une même température ambiante, etc. Puis, une image du cœur de la fibre optique est acquise avec la caméra. Simultanément, la puissance lumineuse en sortie de la fibre est mesurée.

L'image du cœur de la fibre est divisée par l'image de réponse de la caméra, ce qui permet de calibrer ensuite spatialement les images d'électroluminescence de l'installation.

Pour calibrer l'intensité lumineuse mesurée dans les images d'électroluminescence, l'image du cœur de fibre est intégrée spatialement, ce qui fournit un nombre de coups (photons détectés) pour le nombre de photons émis par le laser. Une fois ce rapport coups/photons émis déterminé, on peut diviser par ce rapport les images d'électroluminescence acquises à l'étape 100 pour obtenir une valeur absolue de photons.

Avantageusement, la caméra 11 est aussi préalablement calibrée en longueurs d'ondes au moyen d'une lampe de calibration présentant des raies d'émission à des positions spectrales connues (par exemple, lampe au Xénon).

Une fois cette calibration absolue effectuée, le procédé comprend une sous-étape 220 de détermination, à partir de l'intensité de l'image d'électroluminescence acquise, et pour chaque point (x,y) du module, d'une courbe du rendement quantique externe EQE (E,x,y) du module photovoltaïque en fonction de l'énergie des photons émis par le module.

Cette étape est mise en œuvre en appliquant les relations de réciprocité de Rau, décrites dans l'article de U. Rau et al., « Reciprocity relation between photovoltaic quantum efficiency and electroluminescent emission of solar cells », Phys. Rev. B 76, 085303 -2 août 2007, comme suit :

$$\Phi_{EL}(E, x, y) = EQE(E, x, y)\phi_{bb}(E)\left[\exp\left(\frac{qV(x, y)}{kT}\right) - 1\right]$$

Où :

- $\Phi_{EE}$(E,x,y) est l'intensité d'une image d'électroluminescence,
- E est l'énergie du photon émis,
- EQE(E,x,y) est le rendement quantique externe, et
- $\phi_{bb}$(E) est le flux du corps noir,
- q est la charge électrique élémentaire,
- k est la constante de Boltzmann,
- T est la température du module, et
- V(x,y) est la tension appliquée au module lors de l'acquisition de l'image.

En appliquant cette équation on peut donc déterminer, pixel par pixel, à partir de l'intensité d'électroluminescence une courbe de rendement quantique externe en fonction de l'énergie des photons émis, car le signal de la caméra utilisée est résolu en longueur d'onde et donc en énergie.

Le procédé comprend ensuite une sous-étape 230 de déduction de l'énergie de bande interdite apparente $E_g^{app}(x, y)$ en tout point du module à partir des courbes de rendement quantique externe déterminées auparavant EQE(E,x,y).

En référence à la figure 3, l'énergie de bande interdite apparente $E_g^{app}(x, y)$ est déterminée au moyen d'une extrapolation de la partie linéaire d'une courbe fonction du rendement quantique externe et de l'énergie pour une énergie nulle (intersection de l'extrapolation linéaire avec l'axe des énergies). La fonction est : (E*ln(EQE-1))$^2$.

Ainsi à l'issue de cette étape $E_g^{app}(x, y)$ est connu pour tout point du module.

*Deuxième mode de détermination de la cartographie de* $E_g^{app}$

Dans un deuxième mode de réalisation la cartographie de l'énergie de bande interdite $E_g^{app}(x, y)$ est élaborée à partir de deux images d'électroluminescence du module.

Dans ce cas, le système 1 comprend deux caméras 11 présentant des réponses spectrales différentes, c'est-à-dire des courbes différentes d'efficacité de détection de photons en fonction des longueurs d'ondes des photons. Ces courbes sont appelées courbes de rendement quantique des caméras. De plus, les courbes de rendement quantique des caméras doivent présenter une plage de longueurs d'ondes de recouvrement (c'est-à-dire une plage de longueurs d'ondes où l'efficacité de détection des deux caméras est non nulle), cette plage correspondant à une plage de longueurs d'ondes d'émission d'électroluminescence du module considéré. Avantageusement, la plage de longueurs d'ondes de recouvrement est d'au moins 200 nm. Comme visible sur la figure 4a, les caméras 11 peuvent être montées en translation sur des rails 110 pour pouvoir être déplacées précisément relativement au module.

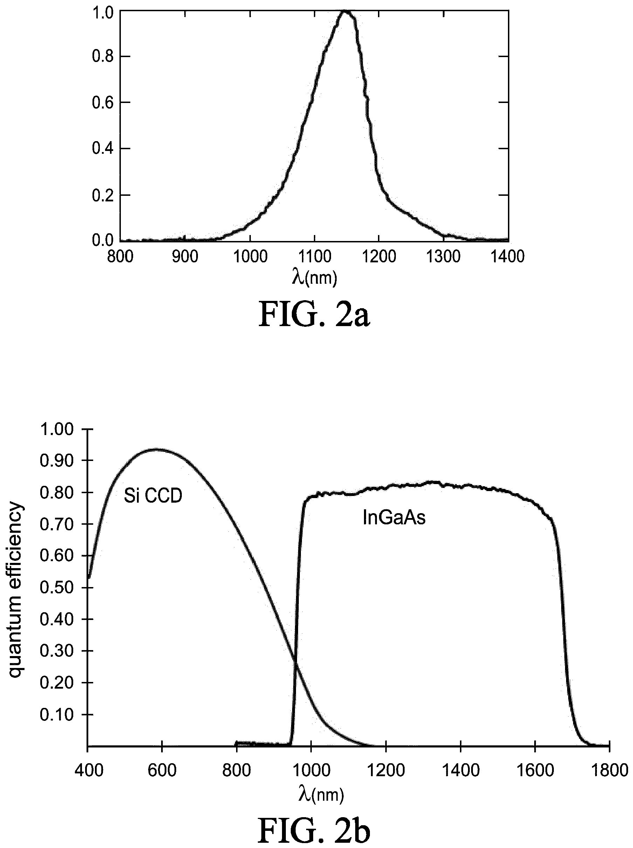

On a représenté sur la figure 2b des courbes de rendement quantique QE pour une caméra CCD silicium et pour une caméra InGaAs.

La caméra ayant un détecteur CCD silicium présente une efficacité quantique s'étendant sur une plage de longueurs d'onde de 400 à 1100 nm, avec un maximum de sensibilité et d'efficacité de détection pour une lumière ayant une longueur d'onde d'environ 600 nm. La sensibilité d'une telle caméra est faible pour les longueurs d'ondes correspondant à la région proche infrarouge de la lumière, comprise entre 900 et 1100 nm.

La caméra ayant un détecteur InGaAs est plus adaptée à la détection des lumières fortement infrarouges, car elle possède une efficacité quantique s'étendant sur une plage de longueurs d'onde de 900 à 1800 nm, avec un maximum de rendement quantique de détection stable sur une plage important comprise entre 900 et 1700 nm.

Sur la figure 2a, le spectre d'électroluminescence représenté est pour un module photovoltaïque à base de silicium cristallin. L'axe des ordonnées est en unités arbitraires. En reprenant l'exemple précédent de choix des caméras, la caméra InGaAs est capable de détecter la totalité du signal d'électroluminescence de ce module, tandis que la caméra CCD Silicium n'est capable de détecter que la partie basse du spectre comprise entre 900 et 1100 nm.

Ces différences de sensibilité sont mises à profit pour déterminer la cartographie de l'énergie de bande apparente interdite $E_g^{app}$. En effet, cette énergie est corrélée à la longueur d'onde d'intensité maximale d'émission $\lambda_{max}$ ; plus $E_g^{app}$ est grande, et plus $\lambda_{max}$ est petite. De fait, une fluctuation de $E_g^{app}(x,y)$ en un point du module entraine une fluctuation de $\lambda_{max}(x,y)$. Ce type de fluctuation n'est généralement pas assez important pour engendrer une variation d'intensité d'une image d'électroluminescence de la caméra la plus adaptée au module en terme de sensibilité spectrale (caméra InGaAs d'après l'exemple précédent).

Le fait d'utiliser deux caméras de sensibilité différentes permet donc d'exploiter les changements locaux d'intensité des images d'électroluminescence pour en déduire les fluctuations de $E_g^{app}(x,y)$.

L'invention n'est toutefois pas limitée à l'exemple décrit précédemment, mais est applicable à différentes technologies photovoltaïques, présentant des spectres d'émission appartenant au domaine du proche-infrarouge comme les matériaux photovoltaïques à base de silicium, les chalcogénures à base de quaternaires CIGS, le tellure de cadmium CdTe, etc, ou des spectres d'émission appartenant au visible comme les matériaux photovoltaïques à base d'arsénure de Gallium GaAs, les pérovskites ou encore le phosphate d'indium.

Le procédé est applicable en sélectionnant la ou les caméras en fonction des spectres de luminescence des modules.

Dans ce mode de réalisation de l'étape 200, une première sous-étape 210' est le calcul d'un ratio d'intensité $R_{Im}$ d'électroluminescence entre les deux images :

$$R_{Im}(x,y) = \frac{Im_{EL}^2(x,y)}{Im_{EL}^1(x,y)}$$

Où $Im_{EL}^1(x,y)$ et $Im_{EL}^2(x,y)$ sont respectivement les images d'électroluminescence des deux caméras. Ce ratio est obtenu en divisant les images pixel par pixel.

Au cours d'une sous-étape 220', effectue une calibration pour déterminer une relation linéaire entre l'énergie de bande interdite apparente du module $E_g^{app}(x,y)$ et la longueur d'onde d'intensité maximale d'émission $\lambda_{max}(x,y)$.

Pour ce faire, on sélectionne 221' un ensemble de points (x,y) du module correspondant à différentes intensités de fluctuations entre les deux images, c'est-à-dire des valeurs de ratios variables. Avantageusement, le nombre de points sélectionné est d'au moins cinq, et de préférence d'au moins 10 pour obtenir à l'issue du procédé une cartographie suffisamment précise de $E_g^{app}(x,y)$. Par exemple l'ensemble de points peut comprendre 10 points.

Puis, pour chaque point de l'ensemble de points sélectionnés à l'étape 221', une mesure 222' du rendement quantique externe EQE(x,y) du module est effectuée expérimentalement, la mise en œuvre de la mesure étant connue de l'Homme du Métier. Pour chaque point (x,y), on déduit ensuite selon la même procédure que décrite précédemment

7

à l'étape 230 en référence à la figure 3, la valeur de l'énergie de bande interdite apparente $E_g^{app}(x,y)$ en ce point.

En chaque point (x,y) de l'ensemble sélectionné à l'étape 221', un spectre d'électroluminescence du module est également acquis 223', et la longueur d'onde d'intensité maximale $\lambda_{max}$ (x,y) est extraite du spectre. Pour la mise en œuvre de cette étape, et comme représenté sur la figure 4c, le système 1 comprend avantageusement un spectromètre 14 choisi en fonction de la technologie du module photovoltaïque analysé. Par exemple il peut s'agir d'un spectromètre InGaAs refroidi à -40°C.

Enfin l'étape de calibration 220' comprend une sous-étape 224' au cours de laquelle on détermine par extrapolation linéaire, à partir des points de l'ensemble pour lesquels on dispose de $E_g^{app}(x,y)$ et $\lambda_{max}$ (x,y), les facteurs de calibration $F_1$ et $F_2$ qui les relient par l'équation suivante :

$$E_g^{app}(x,y) = F_1 \lambda_{max}(x,y) + F_2$$

Enfin lors d'une étape 230', on établit la cartographie de l'énergie de bande interdite apparente $E_g^{app}(x,y)$ à partir de la cartographie du ratio d'intensité d'électroluminescence $R_{Im}(x,y)$ entre les deux images, en exprimant $\lambda_{max}(x,y)$ en fonction de $R_{Im}(x,y)$ dans l'expression qui précède.

Or, la loi de Planck généralisée décrit la relation entre $\lambda_{max}(x,y)$ et $R_{Im}(x,y)$ comme étant logarithmique. Par conséquent on note :

$$\lambda_{max}(x,y) = F_3 \ln\big(R_{Im}(x,y)\big) + F_4$$

F3 et F4 sont déterminés en fonction de la cartographie de $R_{Im}(x,y)$ obtenue à l'étape 210' et des valeurs de $\lambda_{max}(x,y)$ obtenues à l'étable 223'.

On obtient donc pour $E_g^{app}(x,y)$ l'expression suivante en fonction de $R_{Im}(x,y)$:

$$E_g^{app}(x,y) = F_1\big(F_3 \ln\big(R_{Im}(x,y)\big) + F_4\big) + F_2$$

On constate que le premier mode de détermination de $E_g^{app}(x,y)$ est plus rapide à mettre en œuvre car il comprend moins d'étapes de calcul, et il nécessite également moins de matériel. En revanche, le deuxième mode de réalisation permet d'obtenir la cartographie désirée pour tout le module à partir d'un ensemble réduit de points, et sans nécessité d'exprimer l'intensité des images d'électroluminescence en unités absolues.

Une fois la cartographie de $E_g^{app}(x,y)$ obtenue, le procédé comprend l'une au moins des étapes suivantes :

- Détermination d'une cartographie 300 de perte absolue de rendement photovoltaïque,
- Détermination d'une cartographie 400 de la tension de circuit ouvert, et
- Détermination d'une cartographie 500 du courant de saturation.

L'étape 300 est mise en œuvre à partir de la limite d'efficacité de Shockley-Queisser, qui est la courbe d'efficacité maximale $\eta_{max}$ de conversion photovoltaïque d'une cellule solaire en fonction de l'énergie de bande interdite, représentée en figure 5 et décrite dans la publication de W. Shockley et H.J. Queisser, « Detailed Balance Limit of Efficiency of p-n Junction Solar Cells », parue dans Journal of Applied Physics, volume 32, Issue 3, 10.1063/1.14360.34.

Concernant la mise en œuvre de l'étape 300, la cartographie de perte absolue de rendement photovoltaïque $\partial\eta(x,y)$ est obtenue en déterminant 310 une cartographie des fluctuations $\partial E_g^{app}(x,y)$ de l'énergie de bande interdite par rapport à la valeur $\overline{E_g^{app}(x,y)}$ centrale de la distribution des valeurs de Eg(x,y) r. Puis la perte de rendement $\partial\eta(x,y)$ correspondant à une fluctuation $\partial E_g^{app}(x,y)$ est déduite 320 directement de la courbe de limite d'efficacité de Shockley-Queisser, par exemple graphiquement.

Cette étape permet donc de caractériser l'homogénéité spatiale du rendement du module, qui est une donnée de performance et de qualité importante pour améliorer la qualité des modules photovoltaïques produits.

Pour la mise en œuvre de l'étape 400 de détermination d'une cartographie de tension de circuit ouvert, cette tension $V_{0c}(x,y)$ est obtenue à partir de l'énergie de bande interdite par l'équation suivante :

$$V_{0c}(x,y) = \frac{E_g^{app}(x,y)}{q}$$

Où:

- $E_g^{app}(x,y)$ est l'énergie de bande interdite apparente du module en un point (x,y) du module, et
- q est la charge électrique élémentaire.

Enfin, pour la mise en œuvre de l'étape 500 de détermination d'une cartographie du courant de saturation $J_0(x,y)$, ce courant est obtenu à partir de l'énergie de bande interdite par l'équation suivante :

$$J_0(x,y) = A.\exp\left(\frac{-E_g^{app}(x,y)}{kT}\right) + B.\exp\left(\frac{-E_g^{app}(x,y)}{2kT}\right)$$

où A et B sont deux constantes obtenues par ajustement de la courbe par rapport à des valeurs de $J_0$ mesurées.

**Revendications**

1.  Procédé de caractérisation d'un module photovoltaïque (M), comprenant les étapes suivantes :

    - acquisition (100) d'au moins une image d'électroluminescence du module,
    - à partir de l'image acquise, détermination (200) d'une cartographie de l'énergie de bande interdite apparente du module photovoltaïque, et
    - à partir de la cartographie de l'énergie de bande interdite apparente, détermination d'une cartographie du module pour au moins l'une des grandeurs suivantes :

      ◦ tension de circuit ouvert (400),
      ◦ courant de saturation (500), et
      ◦ perte absolue de rendement photovoltaïque (300).

2.  Procédé de caractérisation selon la revendication 1, comprenant une étape de détermination d'une cartographie (300) de perte absolue de rendement photovoltaïque du module, comprenant :

    - la détermination (310) d'une cartographie des fluctuations de l'énergie de bande apparente par rapport à une valeur d'énergie de bande apparente correspondant à un maximum d'efficacité de rendement photovoltaïque, et
    - la déduction (320) de la cartographie de perte absolue de rendement photovoltaïque à partir de la cartographie des fluctuations d'énergie de bande apparente.

3.  Procédé de caractérisation selon l'une des revendications 1 ou 2, comprenant une étape de détermination (400) d'une cartographie de tension de circuit ouvert du module, ladite tension de circuit ouvert $V_{oc}(x,y)$ étant obtenue par l'équation suivante :

$$V_{0c}(x,y) = \frac{E_g^{app}(x,y)}{q}$$

Où:

- $E_g^{app}(x,y)$ est l'énergie de bande interdite apparente du module en un point (x,y) du module, et
- $q$ est la charge électrique élémentaire.

**4.** Procédé de caractérisation selon l'une des revendications 1 à 3, comprenant une étape de détermination (500) d'une cartographie du courant de saturation du module, dans laquelle le courant de saturation du module $J_0(x,y)$ est obtenu par l'équation suivante :

$$J_0(x, y) = A.\exp\left(\frac{-E_g^{app}(x, y)}{kT}\right) + B.\exp\left(\frac{-E_g^{app}(x, y)}{2kT}\right)$$

où A et B sont des constantes.

**5.** Procédé de caractérisation selon l'une des revendications précédentes, dans lequel l'étape de détermination (200) de la cartographie de l'énergie de bande interdite apparente du module photovoltaïque comprend une étape préliminaire de calibration (210) de l'intensité de l'image d'électroluminescence acquise.

**6.** Procédé de caractérisation selon la revendication 5, dans lequel la détermination de la cartographie (200) de l'énergie de bande interdite apparente comprend en outre :

- la détermination (220), à partir de l'intensité de l'image d'électroluminescence acquise, et pour chaque point (x,y) du module, d'une courbe du rendement quantique externe du module photovoltaïque en fonction de l'énergie des photons émis par le module, et
- en chaque point (x,y) du module, la détermination (230) de la valeur de l'énergie de bande interdite apparente à partir de la courbe du rendement quantique externe.

**7.** Procédé de caractérisation selon l'une des revendications 1 à 4, comprenant l'acquisition (100) de deux images d'électroluminescence du module, les deux images étant acquises respectivement par deux caméras (11) présentant des efficacités différentes de détection de photons en fonction de la longueur d'onde des photons, et la cartographie (200) de l'énergie de bande interdite apparente du module est élaborée à partir d'une cartographie du ratio des intensités d'électroluminescence des deux images.

**8.** Procédé de caractérisation selon la revendication 7, dans lequel l'étape de détermination (200) de la cartographie de bande interdite apparente comprend une étape de calibration (220') comportant :

- pour un ensemble de points du module, la mesure (222') du rendement quantique externe du module, et la déduction de l'énergie de bande interdite apparente à partir du rendement quantique externe,
- pour le même ensemble de points du module, la mesure (223') d'un spectre d'électroluminescence du module et la déduction de la longueur d'onde d'intensité maximale d'émission,
- la détermination (224') à partir de l'ensemble des points d'une relation entre l'énergie de bande interdite apparente et la longueur d'onde d'intensité maximale d'émission.

**9.** Procédé de caractérisation selon la revendication 8, dans lequel l'étape de détermination (200) de la cartographie de bande interdite apparente comprend ensuite :

- la détermination (230') d'une relation entre la longueur d'onde d'intensité maximale d'émission du module et le ratio des intensités d'électroluminescence des deux images à partir des valeurs du ratio pour le même ensemble de points du module, et
- la déduction (230') d'une expression de l'énergie de bande interdite apparente en tout point du module en fonction du ratio des intensités d'électroluminescence des deux images.

**10.** Procédé de caractérisation selon l'une des revendications 8 ou 9, dans lequel l'ensemble de points du module comprend au moins 5 points, et de préférence 10 points.

**11.** Procédé de caractérisation selon l'une des revendications 8 à 10, dans lequel les points de l'ensemble de points du module sont choisis tels que les valeurs du ratio des intensités d'électroluminescence des deux images sont différentes pour les différents points de l'ensemble.

**12.** Système (1) de caractérisation d'un module photovoltaïque, comprenant :

- une source d'alimentation électrique (10), adaptée pour fournir une alimentation électrique au module photovoltaïque,
- au moins une caméra (11) adaptée pour acquérir une image d'électroluminescence du module, et
- une unité de traitement (12), comprenant un calculateur (120), le système (1) étant **caractérisé en ce qu'**il est adapté pour la mise en œuvre du procédé selon l'une des revendications précédentes.

13. Système de caractérisation (1) selon la revendication 12, comprenant en outre :

- une deuxième caméra (11), présentant une efficacité de détection de photons en fonction de l'énergie des photons différente de celle de la première caméra, et
- un spectromètre (14), le système étant adapté pour la mise en œuvre du procédé selon l'une des revendications 7 à 11.

**Patentansprüche**

1. Verfahren zur Charakterisierung eines Photovoltaikmoduls (M), welches die folgenden Schritte umfasst:

- Erfassung (100) eines Elektrolumineszenzbildes des Moduls,
- anhand des erfassten Bildes, Bestimmung (200) eines Kennfeldes der scheinbaren Bandlückenenergie des Photovoltaikmoduls, und
- anhand des Kennfeldes der scheinbaren Bandlückenenergie, Bestimmung eines Kennfeldes des Moduls für wenigstens eine der folgenden Größen:

o Offene-Klemmen-Spannung (400),
o Sättigungsstrom (500) und
o absoluter Verlust an photovoltaischem Wirkungsgrad (300).

2. Verfahren zur Charakterisierung nach Anspruch 1, welches einen Schritt der Bestimmung eines Kennfeldes (300) des absoluten Verlustes an photovoltaischem Wirkungsgrad des Moduls umfasst, umfassend:

- die Bestimmung (310) eines Kennfeldes der Schwankungen der scheinbaren Bandenergie in Bezug auf einen Wert der scheinbaren Bandenergie, der einem maximalen photovoltaischen Wirkungsgrad entspricht, und
- die Ableitung (320) des Kennfeldes des absoluten Verlustes an photovoltaischem Wirkungsgrad aus dem Kennfeld der Schwankungen der scheinbaren Bandenergie.

3. Verfahren zur Charakterisierung nach einem der Ansprüche 1 oder 2, welches einen Schritt der Bestimmung (400) eines Kennfeldes der Offene-Klemmen-Spannung des Moduls umfasst, wobei die Offene-Klemmen-Spannung $V_{oc}(x,y)$ durch die folgende Gleichung erhalten wird:

$$V_{oc}(x,y) = \frac{E_g^{app}(x,y)}{q} \, ,$$

wobei:

- $E_g^{app}(x,y)$ die scheinbare Bandlückenenergie des Moduls in einem Punkt (x,y) des Moduls ist, und
- q die elektrische Elementarladung ist.

4. Verfahren zur Charakterisierung nach einem der Ansprüche 1 bis 3, welches einen Schritt der Bestimmung (500) eines Kennfeldes des Sättigungsstroms des Moduls umfasst, in welchem der Sättigungsstroms des Moduls $J_0(x,y)$ durch die folgende Gleichung erhalten wird:

$$J_0(x,y) = A.\exp\left(\frac{-E_g^{app}(x,y)}{kT}\right) + B.\exp\left(\frac{-E_g^{app}(x,y)}{2kT}\right)$$

wobei A und B Konstanten sind.

**5.** Verfahren zur Charakterisierung nach einem der vorhergehenden Ansprüche, wobei der Schritt der Bestimmung (200) des Kennfeldes der scheinbaren Bandlückenenergie des Photovoltaikmoduls einen vorausgehenden Schritt der Kalibrierung (210) der Intensität des erfassten Elektrolumineszenzbildes umfasst.

**6.** Verfahren zur Charakterisierung nach Anspruch 5, wobei die Bestimmung des Kennfeldes (200) der scheinbaren Bandlückenenergie außerdem umfasst:

- die Bestimmung (220), aus der Intensität des erfassten Elektrolumineszenzbildes und für jeden Punkt (x,y) des Moduls, einer Kurve der externen Quantenausbeute des Photovoltaikmoduls in Abhängigkeit von der Energie der von dem Modul emittierten Photonen, und
- in jedem Punkt (x,y) des Moduls, die Bestimmung (230) des Wertes der scheinbaren Bandlückenenergie aus der Kurve der externen Quantenausbeute.

**7.** Verfahren zur Charakterisierung nach einem der Ansprüche 1 bis 4, welches die Erfassung (100) von zwei Elektrolumineszenzbildern des Moduls umfasst, wobei die zwei Bilder von zwei jeweiligen Kameras (11) erfasst werden, die unterschiedliche Photonen-Detektionseffizienzen in Abhängigkeit von der Wellenlänge der Photonen aufweisen, und das Kennfeld (200) der scheinbaren Bandlückenenergie des Moduls aus einem Kennfeld des Verhältnisses der Elektrolumineszenzintensitäten der zwei Bilder erstellt wird.

**8.** Verfahren zur Charakterisierung nach Anspruch 7, wobei der Schritt der Bestimmung (200) des Kennfeldes der scheinbaren Bandlückenenergie einen Schritt der Kalibrierung (220') umfasst, welcher umfasst:

- für eine Menge von Punkten des Moduls, die Messung (222') der externen Quantenausbeute des Moduls und die Ableitung der scheinbaren Bandlückenenergie aus der externen Quantenausbeute,
- für dieselbe Menge von Punkten des Moduls, die Messung (223') eines Elektrolumineszenzspektrums des Moduls und die Ableitung der Wellenlänge maximaler Emissionsintensität,
- die Bestimmung (224'), aus der Menge der Punkte, einer Beziehung zwischen der scheinbaren Bandlückenenergie und der Wellenlänge maximaler Emissionsintensität.

**9.** Verfahren zur Charakterisierung nach Anspruch 8, wobei der Schritt der Bestimmung (200) des Kennfeldes der scheinbaren Bandlückenenergie anschließend umfasst:

- die Bestimmung (230') einer Beziehung zwischen der Wellenlänge maximaler Emissionsintensität des Moduls und dem Verhältnis der Elektrolumineszenzintensitäten der zwei Bilder aus den Werten des Verhältnisses für dieselbe Menge von Punkten des Moduls, und
- die Ableitung (230') eines Ausdrucks der scheinbaren Bandlückenenergie in jedem Punkt des Moduls in Abhängigkeit vom Verhältnis der Elektrolumineszenzintensitäten der zwei Bilder.

**10.** Verfahren zur Charakterisierung nach einem der Ansprüche 8 oder 9, wobei die Menge von Punkten des Moduls mindestens 5 Punkte und vorzugsweise 10 Punkte umfasst.

**11.** Verfahren zur Charakterisierung nach einem der Ansprüche 8 bis 10, wobei die Punkte der Menge von Punkten des Moduls so gewählt werden, dass die Werte des Verhältnisses der Elektrolumineszenzintensitäten der zwei Bilder für die verschiedenen Punkte der Menge verschieden sind.

**12.** System (1) zur Charakterisierung eines Photovoltaikmoduls, welches umfasst:

- eine Stromversorgungsquelle (10), die dafür ausgelegt ist, das Photovoltaikmodul mit Strom zu versorgen,
- wenigstens eine Kamera (11), die dafür ausgelegt ist, ein Elektrolumineszenzbild des Moduls zu erfassen, und
- eine Verarbeitungseinheit (12), die einen Rechner (120) umfasst,
wobei das System (1) **dadurch gekennzeichnet ist, dass** es für die Durchführung des Verfahrens nach einem der vorhergehenden Ansprüche ausgelegt ist.

**13.** System zur Charakterisierung (1) nach Anspruch 12, welches außerdem umfasst:

- eine zweite Kamera (11), die eine Photonen-Detektionseffizienz in Abhängigkeit von der Energie der Photonen aufweist, die von derjenigen der ersten Kamera verschieden ist, und
- ein Spektrometer (14),

wobei das System für die Durchführung es Verfahrens nach einem der Ansprüche 7 bis 11 ausgelegt ist.

**Claims**

1. Method for characterising a photovoltaic module (M), comprising the following steps:

   - capturing (100) at least one electroluminescent image of the module,
   - from the captured image, determining (200) a mapping of apparent band gap energy of the photovoltaic module, and
   - from the mapping of apparent band gap energy, determining a mapping of the module for at least one of the following quantities:

      - - open circuit voltage (400),
      - - saturation current (500), and
      - - absolute loss of photovoltaic efficiency (300).

2. Method for characterising according to claim 1, comprising a step of determining a mapping (300) of absolute loss of photovoltaic efficiency of the module, comprising:

   - determining (310) a mapping of the fluctuations of the apparent band energy with respect to a value of apparent band energy corresponding to a maximum effectiveness of photovoltaic efficiency, and
   - deducing (320) the mapping of absolute loss of photovoltaic efficiency from the mapping of the fluctuations of apparent band energy.

3. Method for characterising according to one of claims 1 or 2, comprising a step of determining (400) a mapping of the open circuit voltage of the module, said open circuit voltage $V_{OC}$ (x,y) being obtained by the following equation:

$$V_{0c}(x,y) = \frac{E_g^{app}(x,y)}{q}$$

   Where:

   - $E_g^{app}$ (x, y) is the apparent band gap energy of the module at a point (x,y) of the module, and
   - q is the elementary electrical charge.

4. Method for characterising according to one of claims 1 to 3, comprising a step of determining (500) a mapping of the saturation current of the module, wherein the saturation current of the module $J_0(x,y)$ is obtained by the following equation:

$$J_0(x,y) = A.\exp\left(\frac{-E_g^{app}(x,y)}{kT}\right) + B.\exp\left(\frac{-E_g^{app}(x,y)}{2kT}\right)$$

   where A and B are constants.

5. Method for characterising according to one of the preceding claims, wherein the step of determining (200) the mapping of apparent band gap energy of the photovoltaic module comprises a preliminary step of calibrating (210) the intensity of the electroluminescent image captured.

6. Method for characterising according to claim 5, wherein determining the mapping (200) of the apparent band gap energy further comprises:

   - determining (220), from the intensity of the electroluminescent image captured, and for each point (x,y) of the module, a curve of the external quantum efficiency of the photovoltaic module according to the energy of the photons emitted by the module, and

- at each point (x,y) of the module, determining (230) the value of the apparent band gap energy from the curve of the external quantum efficiency.

7. Method for characterising according to one of claims 1 to 4, comprising the capturing (100) of the two electroluminescent images of the module, the two images being captured respectively by two cameras (11) having different photon detection efficiencies according to the wavelength of the photons, and the mapping (200) of the apparent band gap energy of the module is developed using a mapping of the ratio of the electroluminescent intensities of the two images.

8. Method for characterising according to claim 7, wherein the step of determining (200) the mapping of the apparent band gap comprises a calibration step (220') including:

- for a set of points of the module, measuring (222') the external quantum efficiency of the module, and deducing the apparent band gap energy from the external quantum efficiency,
- for the same set of points of the module, measuring (223') an electroluminescent spectrum of the module and deducing the wavelength of maximum emission intensity,
- determining (224') from the set of points a relationship between the apparent band gap energy and the wavelength of maximum emission intensity.

9. Method for characterising according to claim 8, wherein the step of determining (200) the mapping of the apparent band gap then comprises:

- determining (230') a relationship between the wavelength of maximum emission intensity of the module and the ratio of the electroluminescent intensities of the two images from values of the ratio for the same set of points of the module, and
- deducing (230') an expression of the apparent band gap energy at any point of the module according to the ratio of the electroluminescent intensities of the two images.

10. Method for characterising according to one of claims 8 or 9, wherein the set of points of the module comprises at least 5 points, and preferably 10 points.

11. Method for characterising according to one of claims 8 to 10, wherein the points of the set of points of the module are chosen such that the values of the ratio of the electroluminescent intensities of the two images are different for the different points of the set.

12. System (1) for characterising a photovoltaic module, comprising:

- an electrical power source (10), suitable for supplying electric power to the photovoltaic module,
- at least one camera (11) suitable for capturing an electroluminescent image of the module, and
- a processing unit (12), comprising a computer (120),
the system (1) being **characterised in that** it is suitable for implementing the method according to one of the preceding claims.

13. System for characterising (1) according to claim 12, further comprising:

- a second camera (11), having a photon detection efficiency according to the energy of the photons that is different from that of the first camera, and
- a spectrometer (14),
the system being suitable for implementing the method according to one of claims 7 to 11.

Acquisition d'au moins une image d'électroluminescence —100

Cartographie $E_g^{app}$ —200

Calcul ratio d'intensité $R_{Im}$ —210'

Calibration absolue intensité d'électroluminescence —210

Calibration relation linéaire entre $E_g^{app}(x,y)$ et $\lambda_{max}(x,y)$ —220'

Détermination EQE(E,x,y) —220

Sélection ensemble de points —221'

Déduction $E_g^{app}(x,y)$ —230

Mesure EQE(x,y) —222'

Mesure spectre d'électroluminescence —223'

Extrapolation linéaire —224'

Déduction $E_g^{app}(x,y)$ —230'

Cartographie tension circuit ouvert —400

Cartographie courant de saturation —500

Cartographie perte de rendement

Cartographie $E_g^{app}(x,y)$ —310

déduction$\partial\eta(x,y)$ —320

—300

FIG. 1

FIG. 2a

FIG. 2b

FIG. 3

FIG. 4a

FIG. 4b

FIG. 5

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2017108511 A

- US 20150070487 A

**Littérature non-brevet citée dans la description**

- **O. FLORIAN et al.** *Solar Energy Materials and Solar Cells,* 22 Janvier 2016, vol. 158, 168-183
- **U. RAU et al.** Reciprocity relation between photovoltaic quantum efficiency and electroluminescent emission of solar cells. *Phys. Rev. B,* 02 Août 2007, vol. 76, 085303

- **W. SHOCKLEY ; H.J. QUEISSER.** Detailed Balance Limit of Efficiency of p-n Junction Solar Cells. *Journal of Applied Physics,* vol. 32 (3), 10.1063, , 1.14360.34